# EUROPEAN PATENT APPLICATION

(11) **EP 1 134 452 A2**
(43) Date of publication of application: **19.09.2001**
(21) Application number: 01301524.3
(22) Date of filing: 21.02.2001
(51) Int. Cl.: F16G 5/18, F16H 9/24

(54) **Rocker joint for CVT chain belt with stepped pins**

(30) Priority: 24.02.2000 JP 2000047533
(71) Applicant: Borg-Warner Automotive K. K., Nabari City, Mie-Prefecture 518-0495 (JP)
(72) Inventor: Wakabayashi, Shozo, Borg-Warner Automotive K.K., Mie 518-0495 (JP); Takeda, Hiroyuki, Borg-Warner Automotive K.K., Mie 518-0495 (JP)
(74) Representative: Lerwill, John

(57) **Abstract**

A power transmission chain belt has multiple inner links, each having a pair of pin apertures. The links are interleaved in the transverse and longitudinal directions. The links are connected by a connecting pin inserted in the pin aperture to compose a chain belt. The connecting pin is composed of a joint pin of an arcuate cross-section, both end faces of which contact the pulley's friction face, and a rocker pin of arcuate cross-section, which is shorter than the joint pin. The outer link is arranged on the outside of outermost inner link. A stepped portion of the joint pin is press-fitted into a pair of pin apertures of outer link.

## Description

This invention relates to a power transmission chain belt and, in detail, to a rocker joint for a continuously variable transmission (CVT) chain belt having stepped pins.

### BACKGROUND OF THE INVENTION

Conventionally, a link plate chain, as disclosed in Laid Open Patent H11-241753, is used as a power transmission chain belt. As shown in Figures 1 and 3 and column 6, lines 18-33 of the said patent publication, the said link plate chain has interleaved chain link plates 1 and outer link plates 2 connected pivotally by a pair of oscillation pieces (connecting pins) 3, which are joint members.

As shown in Figure 3 of the said publication, a pair of oscillation pieces 3 of the said link chain are of the same length and each of said oscillation pieces 3 contacts a conical pulley for frictional power transmission.

When the chain is wound on a pulley, oscillation pieces 3 roll on oscillation faces (rolling face) 6 as the link plate chain bends. At such time, a pair of oscillation pieces 3 rotate in the opposite direction in the same cut-out (pin aperture) 4. Therefore, power loss results as slipping occurs between the end face of the oscillation piece and the pulley's friction face.

The present invention addresses such a problem and it offers a power transmission chain belt that reduces the loss of power transmission.

### SUMMARY OF THE INVENTION

In the present invention, both end faces of the joint pin contact the pulley's friction face and, when a chain is wound on a pulley, only the end face of the joint pin contacts the pulley's friction face and the rocker pin's end face does not come into contact so that slipping between the pin end face and the pulley is suppressed, and heat generation of the operation and power transmission loss are reduced.

A stepped portion is formed at the tip of the joint pin and the said stepped portion is press-fitted into the pin aperture on the outer link. In this manner, the detachment of the link from the center pin is prevented assuredly.

### BRIEF DESCRIPTION OF THE DRAWINGS

Figure 1 is a top view of the chain belt of the present invention.

Figure 2 is a front view of the chain belt of Figure 1.

Figure 3 is a sectional view along Section III-III of Figure 1.

### DETAILED DESCRIPTION OF THE PREFERRED EMBODIMENTS

A practical example of this invention is explained below with the aid of the attached figures.

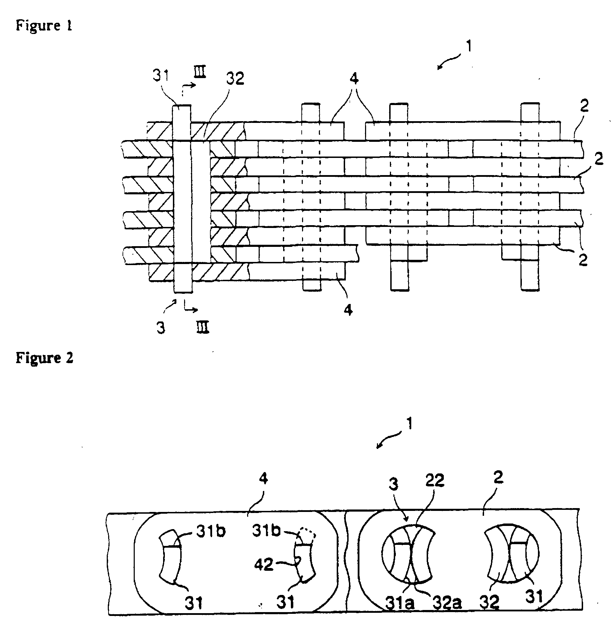

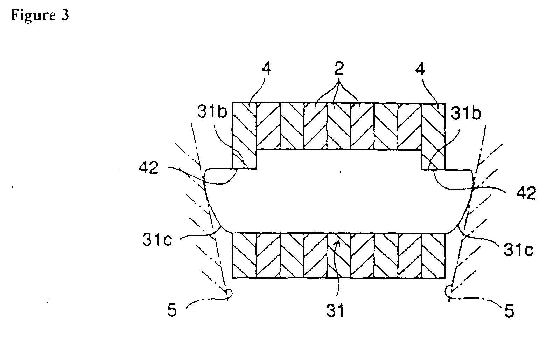

Figure 1 is a top view of the power transmission chain belt (hereafter, chain belt) of a practical example of this invention. Figure 2 is a front view of the chain belt of Figure 1. Figure 3 shows a sectional view along line section III-III of Figure 1.

As shown in Figures 1 and 2, chain belt 1 has multiple inner links 2, each having a pair of pin apertures 22 . The links are interleaved in the transverse and longitudinal directions and has inner links 2 connected pivotally by connecting pin 3 which is inserted in the pin apertures 22 of the inner links 2.

Connecting pin 3 is composed of joint pin 31 of arcuate cross-section and rocker pin 32 of the same cross-section. The pins 31, 32 are opposed to each other on their convex curved side faces 31a, 32a (rolling faces) in pin aperture 22. Joint pin 31 is longer than rocker pin 32 and joint pin 31 penetrates pin aperture 42 of outer link 4 and extends to the outside of outer link 4.

As shown in Figure 3, stepped portion 31b is formed at the tip of joint pin 31 and stepped portion 31b is press-fitted into pin aperture 42 of outer link 4. Thereby, detachment of the link from the joint pin 31 is prevented. Curved faces 31c are formed on both ends of joint pin 31, and said curved faces 31c contact the pulley's friction face 5 for frictional power transmission between the said faces and the pulley.

In this practical example, curved faces 31c of the joint pin's ends contact the pulley's friction face 5 and when a chain belt is wound on the pulley, only the end faces of joint pin 31 contact the pulley's friction face 5, while the end face of rocker pin 32 does not contact so that slipping between the pin's end face and the pulley's friction face is prevented during operation; as a result, power transmission loss is reduced.

As shown above, only both end faces of the joint pin contact the pulley's friction face in the power transmission chain belt of this invention, so that slipping between the pin end face and the pulley's friction face is prevented and power transmission loss is reduced.

## Claims

1. A power transmission chain belt, comprising:
a plurality of interleaved rows of inner links, pin members connecting adjacent rows of inner links, each inner link defining a pair of apertures for receiving said pin members, each of said pin members being composed of a joint pin having an arcuate shape and a rocker pin having an arcuate shape, said rocker pin being shorter than said joint pin, both ends of said joint pin contacting the friction faces of a pulley.

2. A power transmission chain belt according to claim 1, including a plurality of outer links placed outside the outermost inner links, each of said outer links having a pair of apertures for press-fitting the joint pins.

3. The power transmission chain belt of Claim 2, wherein said joint pin has stepped portions on its ends, said stepped portions being press-fitted into apertures of said outer links.

4. A power transmission system comprising a power transmission chain belt according to any one of claims 1 to 3.
